# EUROPÄISCHE PATENTSCHRIFT

(11) **EP 3 317 510 B1**
(45) Veröffentlichungstag und Bekanntmachung des Hinweises auf die Patenterteilung: **16.10.2019**
(21) Anmeldenummer: 16720863.6
(22) Anmeldetag: 09.05.2016
(51) Int. Cl.: F02M 59/36, F02M 63/00, F16K 31/06, H01F 7/16

(54) **ELEKTROMAGNETISCH BETÄTIGBARES SAUGVENTIL FÜR EINE HOCHDRUCKPUMPE SOWIE HOCHDRUCKPUMPE**
ELECTROMAGNETICALLY ACTUATED SUCTION VALVE FOR A HIGH-PRESSURE PUMP, AND HIGH-PRESSURE PUMP
SOUPAPE D'ASPIRATION À ACTIONNEMENT ÉLECTROMAGNÉTIQUE POUR UNE POMPE HAUTE PRESSION ET POMPE HAUTE PRESSION

(30) Priorität: 02.07.2015 DE 102015212390
(43) Veröffentlichungstag der Anmeldung: 09.05.2018
(73) Patentinhaber: Robert Bosch GmbH, 70442 Stuttgart (DE)
(72) Erfinder: MEISIEK, Achim, 73635 Rudersberg (DE); KOLB, Stefan, 71116 Gaertringen (DE); LAIBACHER, Bjoern, 71711 Murr (DE); HEBER, Hans, 70193 Stuttgart (DE)
(86) Internationale Anmeldenummer: PCT/EP2016/060278
(87) Internationale Veröffentlichungsnummer: WO 2017/001093

(56) Entgegenhaltungen:
- EP-A1- 2 716 902
- DE-A1-102011 089 594
- DE-A1-102013 211 176
- JP-A- 2000 146 013
- JP-A- 2012 082 849
- US-A1- 2013 306 895

## Beschreibung

Die Erfindung betrifft ein elektromagnetisch betätigbares Saugventil für eine Hochdruckpumpe eines Kraftstoffeinspritzsystems, insbesondere eines Common-Rail-Einspritzsystems, mit den Merkmalen des Oberbegriffs des Anspruchs 1. Ferner betrifft die Erfindung eine Hochdruckpumpe für ein Kraftstoffeinspritzsystem, insbesondere ein Common-Rail-Einspritzsystem, mit einem solchen Saugventil.

### Stand der Technik

Aus der Offenlegungsschrift DE 10 2013 220 593 A1 ist ein elektromagnetisch ansteuerbares Saugventil für eine Hochdruckpumpe eines Kraftstoffeinspritzsystems bekannt, das ein in einer Axialbohrung eines Ventilkörpers hubbewegliches Ventilschließelement umfasst, das in Schließrichtung von der Federkraft einer Feder beaufschlagt ist. Ferner umfasst das bekannte Saugventil eine Magnetbaugruppe mit einer Magnetspule zur Einwirkung auf einen hubbeweglichen Anker, der mit dem Ventilschließelement koppelbar ist. Um eine besonders kompakt bauende Anordnung zu schaffen, sind zwei Endlagen des Ankers durch Hubanschläge festgelegt, die durch einen die Magnetspule aufnehmenden Magnettopf und einen mit dem Magnettopf verbundenen Magnetdeckel ausgebildet werden. Der Magnettopf und der Magnetdeckel definieren damit den Ankerbewegungsraum. Das heißt, dass der Magnettopf als unterer Hubanschlag und der Magnetdeckel als oberer Hubanschlag für den Anker dienen.

Weitere elektromagnetisch ansteuerbare Saugventile sind bekannt aus der EP2716902 A1 und der JP2000146013 A.

Beim Anschlagen des Ankers an einem Hubanschlag wird ein Impuls i erzeugt, der das Produkt der bewegten Masse m und deren Geschwindigkeit v ist (i = m*v). Der Impuls erzeugt eine Anregung, die als Körperschall auf angrenzende Bauteile und als Luftschall auf die Umgebungsluft übertragen wird. Damit verbunden ist eine Geräuschentwicklung, die als unangenehm empfunden wird.

Ausgehend von dem vorstehend genannten Stand der Technik liegt der vorliegenden Erfindung die Aufgabe zugrunde, ein elektromagnetisch betätigbares Saugventil für eine Hochdruckpumpe anzugeben, das möglichst geräuscharm betätigbar ist. Zugleich soll das Saugventil einfach und kostengünstig herstellbar sein.

Zur Lösung der Aufgabe wird das elektromagnetisch betätigbare Saugventil für eine Hochdruckpumpe eines Kraftstoffeinspritzsystems, insbesondere eines Common-Rail-Einspritzsystems, mit den Merkmalen des Anspruchs 1 angegeben. Vorteilhafte Weiterbildungen der Erfindung sind den Unteransprüchen zu entnehmen. Ferner wird eine Hochdruckpumpe für ein Kraftstoffeinspritzsystem, insbesondere ein Common-Rail-Einspritzsystem, mit einem solchen Saugventil vorgeschlagen.

### Offenbarung der Erfindung

Das für eine Hochdruckpumpe eines Kraftstoffeinspritzsystems, insbesondere eines Common-Rail-Einspritzsystems, vorgeschlagene elektromagnetisch betätigbare Saugventil umfasst eine Magnetbaugruppe mit einer ringförmigen Magnetspule zur Einwirkung auf einen Anker, der in einer Ausnehmung eines Ventilkörpers hubbeweglich aufgenommen und in Richtung eines mit einem Ventilsitz zusammenwirkenden hubbeweglichen Ventilschließelements von der Federkraft einer Ankerfeder beaufschlagt ist. Dem Anker liegt dabei an einem Arbeitsluftspalt ein Polkern gegenüber, der erfindungsgemäß eine Polscheibe durchsetzt und über einen umlaufenden Radialspalt von der Polscheibe entkoppelt ist.

Bei dem erfindungsgemäßen Saugventil bildet demnach der Polkern den oberen Hubanschlag für den Anker aus. Dies ergibt sich aus der Anordnung des Polkerns in Bezug auf den Anker. Mit Anschlagen des Ankers am oberen Hubanschlag wird der Polkern durch den Anschlagimpuls angeregt. Die Anregung wird jedoch nicht auf die den Polkern umgebende Polscheibe übertragen, da diese über einen umlaufenden Radialspalt vom Polkern entkoppelt ist. Die Entkopplung bewirkt, dass weniger Bauteile durch den Anschlagimpuls angeregt werden, die in der Lage sind, die Anregung auf die Umgebungsluft zu übertragen. Insofern wird die Geräuschentwicklung zumindest in Form von Luftschall deutlich gemindert.

Durch die Entkopplung von Polkern und Polscheibe wird insbesondere verhindert, dass die Polscheibe in Schwingung versetzt wird. Da die Polscheibe eine vergleichsweise große Übertragungsfläche besitzt, kann auf diese Weise die Geräuschentwicklung deutlich reduziert werden. Der Radialspalt zwischen dem Polkern und der Polscheibe ist dabei derart dimensioniert, dass einerseits die gewünschte akustische Entkopplung, andererseits der zum Aufbau eines Magnetfelds erforderliche magnetische Übergang gewährleistet ist. Das heißt, dass der magnetische Übergang über den umlaufenden Radialspalt erfolgt.

Bevorzugt ist die Polscheibe zumindest bereichsweise von einer Magnethülse umgeben, in welcher die Magnetspule aufgenommen ist. Die Magnethülse erweitert den Magnetkreis, so dass hohe Magnetkräfte erreichbar sind. Zugleich kann über die vorgeschlagene Anordnung von Polscheibe und/oder Magnetspule eine in axialer Richtung besonders kompakt bauende Anordnung erzielt werden.

Des Weiteren bevorzugt ist bzw. sind die Polscheibe, die Magnethülse und/oder der Polkern zumindest teilweise mit einem Kunststoff umspritzt. Die Kunststoff-Umspritzung bewirkt eine Dämpfung, da sie im Vergleich zu harten metallischen Bauteilen in der Lage ist, zumindest einen Teil der Schwingungen aufzunehmen und zu kompensieren. Die Umgebungsluft wird auf diese Weise weniger zum Schwingen angeregt.

Sofern der Polkern mit Kunststoff umspritzt ist, ist vorzugsweise zwischen der Kunststoff-Umspritzung und dem Polkern ein Luftspalt ausgebildet. Der Luftspalt optimiert die Dämpfung, da die Kunststoff-Umspritzung über den Luftspalt vom Polkern entkoppelt ist. Ein Luftspalt kann darüber hinaus zwischen der Kunststoff-Umspritzung und der Polscheibe ausgebildet werden. Da diese jedoch bereits erfindungsgemäß vom Polkern entkoppelt ist, wird sie weniger stark in Schwingungen versetzt, so dass ein Luftspalt zwischen der Kunststoff-Umspritzung und dem Polkern am wirkungsvollsten ist.

Vorzugsweise formt die Kunststoff-Umspritzung ein Anschlussteil aus. Das Anschlussteil kann dem Anschluss der Magnetbaugruppe, insbesondere der Magnetspule, an eine Stromversorgung dienen. Die Anschlussdrähte der Magnetspule sind hierzu bevorzugt bis in das Anschlussteil geführt. Zur Aufnahme eines Steckers kann das Anschlussteil eine Ausnehmung aufweisen, in welcher dann vorzugsweise auch die Anschlussdrähte der Magnetspule enden.

Vorteilhafterweise ist im Polkern eine zentrale Ausnehmung zur Aufnahme eines stift- oder hülsenförmigen Einstellelements ausgebildet, an dem die Ankerfeder axial abgestützt ist. Das Einstellelement erlaubt eine genaue Einstellung der Federkraft der Ankerfeder, so dass diese als Dämpfer zwischen dem Anker und dem oberen Hubanschlag auslegbar ist. Die Bewegung des Ankers wird dann vor Erreichen des oberen Hubanschlags abgebremst, wobei - entsprechend der eingangs genannten Formel - mit der Reduzierung der Geschwindigkeit v der bewegten Masse m eine Reduzierung des Anschlagimpulses i einhergeht.

Vorzugsweise ist das stift- oder hülsenförmige Einstellelement zur Abstützung der Ankerfeder in die Ausnehmung des Polkerns eingepresst. Die Einstellung der Federkraft der Ankerfeder kann dann in einfacher Weise über die Einpresstiefe des Einstellelements vorgenommen werden.

Des Weiteren wird vorgeschlagen, dass im Anker eine zentrale Ausnehmung ausgebildet ist, in welcher die Ankerfeder abschnittsweise aufgenommen ist. Durch diese Maßnahme ist die Ankerfeder in radialer Richtung lagefixiert. Die Ausnehmung verringert zudem die bewegte Masse des Ankers, so dass - entsprechend der eingangs genannten Formel - der Anschlagimpuls i weiter reduziert wird.

In Weiterbildung der Erfindung wird vorgeschlagen, dass im Anker mindestens eine als Durchströmöffnung dienende, dezentral angeordnete Axialbohrung ausgebildet ist. Die Durchströmöffnung dient dem Druckausgleich zwischen zwei Druckräumen, die durch den Anker getrennt werden. Vorzugsweise weist der Anker mehrere dezentral angeordnete Axialbohrungen auf, die im gleichen Winkelabstand zueinander angeordnet sind. Dadurch kann zum Einen der Druckausgleich beschleunigt, zum Anderen die bewegten Masse des Ankers weiter verringert werden.

Gemäß einer bevorzugten Ausführungsform der Erfindung sind der Ventilkörper und der Polkern zur Festlegung eines oberen Hubanschlags und eines unteren Hubanschlags für den Anker über eine Hülse verbunden. Die Hülse ist vorzugsweise aus einem nichtmagnetischen bzw. nichtmagnetisierbaren Material gefertigt, um zugleich eine magnetische Trennung zwischen dem Polkern und dem Ventilkörper zu bewirken.

Um den Polkern und den Ventilkörper über die Hülse zu verbinden, kann zumindest ein Abschnitt des Ventilkörpers und/oder des Polkerns in die Hülse eingepresst und mit der Hülse verschweißt sein. Die Pressverbindung ermöglicht eine genaue Einstellung des Ankerbewegungsraums zwischen dem unteren und dem oberen Hubanschlag über die Einpresstiefe. Die Schweißverbindung dient der dauerhaften Fixierung der Lage der Bauteile zueinander.

Wie bereits erwähnt, wird der obere Hubanschlag durch den Polkern ausgebildet. Demgegenüber wird der untere Hubanschlag vorteilhafterweise durch ein ring- oder scheibenförmiges Anschlagelement ausgebildet, das in die Ausnehmung des Ventilkörpers, in welcher der Anker aufgenommen ist, eingesetzt und an einem ringförmigen Absatz des Ventilkörpers abgestützt ist. Über die Bauhöhe des Anschlagelements kann der Hub des Ankers voreingestellt werden.

Um einer Schwingungsübertragung vom Saugventil auf die Hochdruckpumpe entgegen zu wirken, wird vorgeschlagen, dass das Saugventil eine Überwurfmutter zur Befestigung an einem Gehäuseteil der Hochdruckpumpe umfasst. Die Überwurfmutter ermöglicht eine Befestigung unter einer axialen Vorspannung, so dass eine hohe Steifigkeit erreicht wird, die einer Schwingungsübertragung entgegen wirkt. Zur Abstützung der Überwurfmutter am Saugventil ist vorzugsweise an der Magnethülse ein sich nach radial außen erstreckender Ringbund ausgebildet.

Ferner wird eine Hochdruckpumpe für ein Kraftstoffeinspritzsystem, insbesondere ein Common-Rail-Einspritzsystem, vorgeschlagen, die ein erfindungsgemäßes elektromagnetisch betätigbares Saugventil zur Befüllung eines Hochdruck-Elementraums der Hochdruckpumpe mit Kraftstoff umfasst. Die Befestigung des Saugventils an der Hochdruckpumpe erfolgt vorzugsweise mittels einer Überwurfmutter, die mit einem am Gehäuseteil der Hochdruckpumpe ausgebildeten Außengewinde verschraubt wird.

Eine bevorzugte Ausführungsform der Erfindung wird nachfolgend anhand der beigefügten Zeichnungen näher erläutert. Diese zeigen:
Fig. 1 einen schematischen Längsschnitt durch ein erfindungsgemäßes elektromagnetisch betätigbares Saugventil und
Fig. 2 einen schematischen Längsschnitt durch die vormontierten Baugruppen des Saugventils der Fig. 1.

### Ausführliche Beschreibung der Zeichnungen

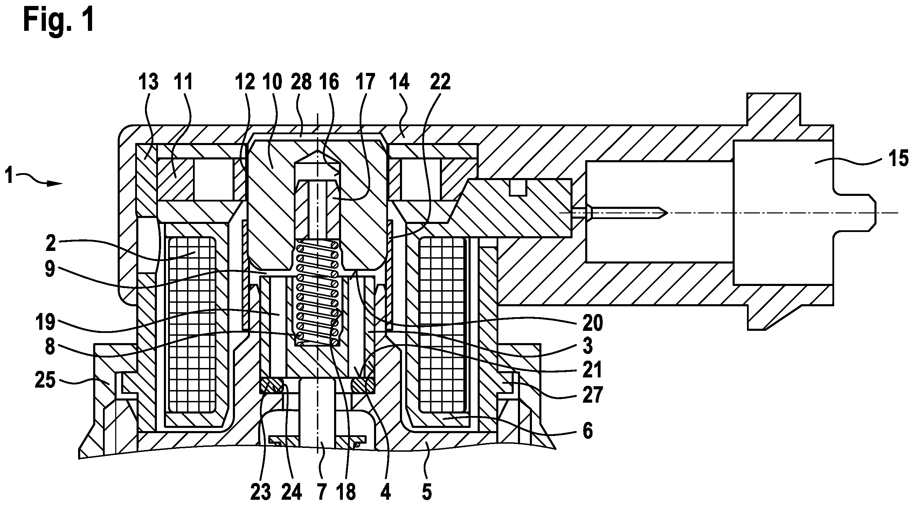

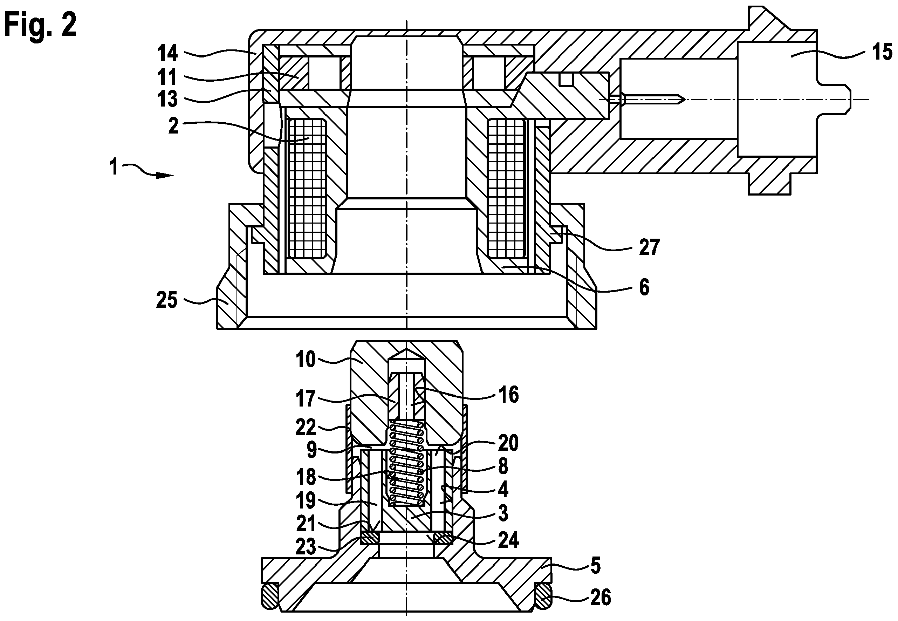

Das in den Figuren 1 und 2 dargestellte Saugventil umfasst eine Magnetbaugruppe 1 mit einer ringförmigen Magnetspule 2, die auf einem Magnetspulenträger 6 angeordnet und von einer Magnethülse 13 umgeben ist. Auf dem Magnetspulenträger 6 liegt eine Polscheibe 11 auf, die ebenfalls von der Magnethülse 13 umgeben ist. Zur Fixierung der Polscheibe 11 in der Magnethülse 13 sind beide mit einem Kunststoff umspritzt, wobei die Kunststoff-Umspritzung 14 zugleich ein Anschlussteil 15 ausformt, das mit einem elektrischen Steckerteil einer externen Stromversorgung verbindbar ist (siehe Fig. 2, obere Darstellung, welche die Magnetbaugruppe als vormontierte Einheit zeigt).

Das Saugventil der Figuren 1 und 2 umfasst ferner einen Anker 3, der in einer Ausnehmung 4 eines Ventilkörpers 5 hubbeweglich aufgenommen und in Richtung eines stößelartigen Ventilschließelements 7 von der Federkraft einer Ankerfeder 8 beaufschlagt ist. Die Ankerfeder 8 ist hierzu einerseits in einer zentralen Ausnehmung 18 des Ankers 3 und andererseits in einer zentralen Ausnehmung 16 eines Polkerns 10 aufgenommen, der dem Anker 3 an einem Arbeitsluftspalt 9 gegenüber liegt. Der Polkern 10 bildet demnach einen oberen Hubanschlag 20 für den Anker 3 aus. Ein unterer Hubanschlag 21 wird durch ein ringförmiges Anschlagelement 23 ausgebildet, das in die Ausnehmung 4 des Ventilkörpers 5 eingesetzt und an einem ringförmigen Absatz 24 des Ventilkörpers 5 abgestützt ist (siehe Fig. 2, untere Darstellung, welche die Hydraulikbaugruppe als vormontierte Einheit zeigt).

Zur Festlegung der Hubanschläge 20, 21 des Ankers 3 sind der Polkern 10 und der Ventilkörper 5 über eine Hülse 22 fest verbunden. Die Einstellung der Federkraft der Ankerfeder 8 erfolgt über ein hülsenförmiges Einstellelement 17, das in die zentrale Ausnehmung 16 des Polkerns 10 eingepresst ist.

Bei der Endmontage des Saugventils werden die in der Fig. 2 dargestellten Einheiten derart ineinander gesetzt, dass der Polkern 10 unter Ausbildung eines umlaufenden Radialspalts 12 die Polscheibe 11 durchsetzt (siehe Fig. 1). Der Radialspalt 12 bewirkt eine Entkopplung der Polscheibe 11 vom Polkern 10, so dass die beim Anschlagen des Ankers 3 am Polkern 10 erzeugten Schwingungen nicht auf die Polscheibe 11 übertragen werden. Zugleich wird über die Kunststoff-Umspritzung 14 eine Dämpfung bewirkt, die einer Übertragung des Anschlagimpulses an die Umgebungsluft entgegenwirkt. Zwischen der Kunststoff-Umspritzung 14 und dem Polkern 10 ist zudem ein Luftspalt 28 ausgebildet.

Der Anker 3 des Saugventils der Fig. 1 weist eine reduzierte Bauhöhe auf, wodurch die bewegte Masse und in der Folge der Anschlagimpuls reduziert wird. Durch im Anker 3 vorgesehene dezentral angeordnete Axialbohrungen 19, die vorrangig dem Druckausgleich dienen, kann die bewegte Masse weiter reduziert werden.

Die Befestigung an einer Hochdruckpumpe erfolgt mittels einer Überwurfmutter 25, die an einem sich nach radial außen erstreckenden Ringbund 27 der Magnethülse 13 abstützbar ist. Andernends wird die Überwurfmutter 25 mit einem Gehäuseteil (nicht dargestellt) der Hochdruckpumpe verschraubt. Dabei kann auf den Ventilkörper 5 eine axiale Vorspannkraft aufgebracht werden, die einer Schwingungsübertragung vom Saugventil auf die Hochdruckpumpe entgegen wirkt. Die erforderliche Abdichtung kann über einen Dichtring 26 bewirkt werden, der zwischen dem Ventilkörper 5 und der Magnethülse 13 eingelegt ist.

Die vorstehend genannten Maßnahmen wirken sich jeweils allein oder in Kombination geräuschmindernd aus. Das in den Figuren 1 und 2 dargestellte Saugventil zeichnet sich demnach durch eine geräuscharme Betätigung aus.

## Patentansprüche

1. Elektromagnetisch betätigbares Saugventil für eine Hochdruckpumpe eines Kraftstoffeinspritzsystems, insbesondere eines Common-Rail-Einspritzsystems, umfassend eine Magnetbaugruppe (1) mit einer ringförmigen Magnetspule (2) zur Einwirkung auf einen Anker (3), der in einer Ausnehmung (4) eines Ventilkörpers (5) hubbeweglich aufgenommen und in Richtung eines mit einem Ventilsitz zusammenwirkenden hubbeweglichen Ventilschließelements (7) von der Federkraft einer Ankerfeder (8) beaufschlagt ist, wobei dem Anker (3) an einem Arbeitsluftspalt (9) ein Polkern (10) gegenüberliegt,
**dadurch gekennzeichnet, dass** der Polkern (10) eine Polscheibe (11) durchsetzt und über einen umlaufenden Radialspalt (12) von der Polscheibe (11) entkoppelt ist.

2. Saugventil nach Anspruch 1,
**dadurch gekennzeichnet, dass** die Polscheibe (11) zumindest bereichsweise von einer Magnethülse (13) umgeben ist, in welcher die Magnetspule (2) aufgenommen ist.

3. Saugventil nach Anspruch 1 oder 2,
**dadurch gekennzeichnet, dass** die Polscheibe (11), die Magnethülse (13) und/oder der Polkern (10) zumindest teilweise mit einem Kunststoff umspritzt ist bzw. sind, wobei vorzugsweise zwischen der Kunststoff-Umspritzung (14) und dem Polkern (10) ein Luftspalt (28) ausgebildet ist.

4. Saugventil nach einem der vorhergehenden Ansprüche,
**dadurch gekennzeichnet, dass** im Polkern (10) eine zentrale Ausnehmung (16) zur Aufnahme eines stift- oder hülsenförmigen Einstellelements (17) ausgebildet ist, an dem die Ankerfeder (8) axial abgestützt ist, wobei vorzugsweise das Einstellelement (17) in die Ausnehmung (16) des Polkerns (10) eingepresst ist.

5. Saugventil nach einem der vorhergehenden Ansprüche,
**dadurch gekennzeichnet, dass** im Anker (3) eine zentrale Ausnehmung (18) ausgebildet ist, in welcher die Ankerfeder (8) abschnittsweise aufgenommen ist.

6. Saugventil nach einem der vorhergehenden Ansprüche,
**dadurch gekennzeichnet, dass** im Anker (3) mindestens eine als Durchströmöffnung dienende, dezentral angeordnete Axialbohrung (19) ausgebildet ist.

7. Saugventil nach einem der vorhergehenden Ansprüche,
**dadurch gekennzeichnet, dass** der Ventilkörper (5) und der Polkern (10) zur Festlegung eines oberen Hubanschlags (20) und eines unteren Hubanschlags (21) für den Anker (3) über eine Hülse (22) verbunden sind, wobei vorzugsweise ein Abschnitt des Ventilkörpers (5) und/oder ein Abschnitt des Polkerns (10) in die Hülse (22) eingepresst und mit der Hülse (22) verschweißt ist bzw. sind.

8. Saugventil nach Anspruch 7,
**dadurch gekennzeichnet, dass** der obere Hubanschlag (20) durch den Polkern (10) und der untere Hubanschlag (21) durch ein ring- oder scheibenförmiges Anschlagelement (23) ausgebildet wird, das in die Ausnehmung (4) des Ventilkörpers (5), in welcher der Anker (3) aufgenommen ist, eingesetzt und an einem ringförmigen Absatz (24) des Ventilkörpers (5) abgestützt ist.

9. Saugventil nach einem der vorhergehenden Ansprüche,
**dadurch gekennzeichnet, dass** das Saugventil eine Überwurfmutter (25) zur Befestigung an einem Gehäuseteil einer Hochdruckpumpe umfasst, wobei vorzugsweise zur Abstützung der Überwurfmutter (25) ein sich nach radial außen erstreckender Ringbund (27) an der Magnethülse (13) ausgebildet ist.

10. Hochdruckpumpe für ein Kraftstoffeinspritzsystem, insbesondere ein Common-Rail-Einspritzsystem, mit einem elektromagnetisch betätigbaren Saugventil nach einem der vorhergehenden Ansprüche.

## Claims

1. Electromagnetically actuatable suction valve for a high-pressure pump of a fuel injection system, in particular a common-rail injection system, comprising a magnetic subassembly (1) with an annular magnetic coil (2) for acting on an armature (3) which is accommodated in a cavity (4) of a valve body (5) so as to be liftable and to which the spring force of an armature spring (8) is applied in the direction of a liftable valve-closing element (7) interacting with a valve seat, a pole core (10) being located opposite the armature (3) at an operational air gap (9),
**characterized in that** the pole core (10) penetrates a pole disc (11) and is decoupled from the pole disc (11) by a circumferential radial gap (12) .

2. Suction valve according to Claim 1,
**characterized in that** the pole disc (11) is at least partly surrounded by a magnetic sleeve (13), in which the magnetic coil (2) is accommodated.

3. Suction valve according to Claim 1 or 2,
**characterized in that** the pole disc (11), the magnetic sleeve (13) and/or the pole core (10) is or are at least partly encapsulated with a plastic, wherein an air gap (28) is preferably formed between the plastic encapsulation (14) and the pole core (10).

4. Suction valve according to one of the preceding claims,
**characterized in that** a central recess (16) for accommodating a pin-shaped or sleeve-shaped adjusting element (17), on which the armature spring (8) is supported axially, is formed in the pole core (10), wherein the adjusting element (17) is preferably pressed into the recess (16) in the pole core (10).

5. Suction valve according to one of the preceding claims,
**characterized in that** a central recess (18), in which the armature spring (8) is partly accommodated, is formed in the armature (3).

6. Suction valve according to one of the preceding claims,
**characterized in that** at least one axial bore (19) arranged decentrally and serving as a flow opening is formed in the armature (3).

7. Suction valve according to one of the preceding claims,
**characterized in that** the valve body (5) and the pole core (10) are connected via a sleeve (22) in order to fix an upper stroke stop (20) and a lower stroke stop (21) for the armature (3), wherein a section of the valve body (5) and/or a section of the pole core (10) is or are preferably pressed into the sleeve (22) and is or are welded to the sleeve (22).

8. Suction valve according to Claim 7,
**characterized in that** the upper stroke stop (20) is formed by the pole core (10) and the lower stroke stop (21) is formed by an annular or disc-shaped stop element (23), which is inserted into the recess (4) in the valve body (5) in which the armature (3) is accommodated, and is supported on an annular shoulder (24) of the valve body (5).

9. Suction valve according to one of the preceding claims,
**characterized in that** the suction valve comprises a union nut (25) for fixing to a housing part of a high-pressure pump, wherein an annular collar (27) extending radially outwards to support the union nut (25) is preferably formed on the magnetic sleeve (13).

10. High-pressure pump for fuel injection system, in particular a common-rail injection system, having an electromagnetically actuatable suction valve according to one of the preceding claims.

## Revendications

1. Soupape d'aspiration à actionnement électromagnétique pour une pompe haute pression d'un système d'injection de carburant, en particulier d'un système d'injection à rampe commune, comprenant un ensemble magnétique (1) avec une bobine magnétique annulaire (2) pour agir sur un induit (3), qui est logé en mouvement de levée dans un évidement (4) d'un corps de soupape (5) et qui est poussé par la force élastique d'un ressort d'induit (8) en direction d'un élément de fermeture de soupape (7) mobile en translation coopérant avec un siège de soupape, dans laquelle un noyau polaire (10) est situé en face de l'induit (3) à un entrefer de travail (9),
**caractérisée en ce que** le noyau polaire (10) traverse un disque polaire (11) et est découplé du disque polaire (11) par une fente radiale périphérique (12).

2. Soupape d'aspiration selon la revendication 1, **caractérisée en ce que** le disque polaire (11) est au moins localement entouré par une douille magnétique (13), dans laquelle la bobine magnétique (2) est logée.

3. Soupape d'aspiration selon une revendication 1 ou 2, **caractérisée en ce que** le disque polaire (11), la douille magnétique (13) et/ou le noyau polaire (10) est/sont enrobé(s) au moins partiellement avec une matière plastique, dans laquelle un entrefer (28) est de préférence formé entre l'enrobage de matière plastique (14) et le noyau polaire (10).

4. Soupape d'aspiration selon l'une quelconque des revendications précédentes, **caractérisée en ce qu'**un évidement central (16) est formé dans le noyau polaire (10) pour le logement d'un élément de réglage (17) en forme de tige ou de douille, sur lequel le ressort d'induit (8) prend appui axialement, dans laquelle l'élément de réglage (17) est de préférence serti dans l'évidement (16) du noyau polaire (10).

5. Soupape d'aspiration selon l'une quelconque des revendications précédentes, **caractérisée en ce qu'**un évidement central (18) est formé dans l'induit (3), dans lequel le ressort d'induit (8) est en partie logé.

6. Soupape d'aspiration selon l'une quelconque des revendications précédentes, **caractérisée en ce qu'**au moins un alésage décentré (19), servant d'ouverture de passage d'écoulement, est formé dans l'induit (3).

7. Soupape d'aspiration selon l'une quelconque des revendications précédentes, **caractérisée en ce que** le corps de soupape (5) et le noyau polaire (10) sont reliés par une douille (22) pour la fixation d'une butée de levée supérieure (20) et d'une butée de levée inférieure (21) pour l'induit (3), dans lequel une partie du corps de soupape (5) et/ou une partie du noyau polaire (10) est/sont de préférence sertie(s) dans la douille (22) et est/sont soudée(s) à la douille (22).

8. Soupape d'aspiration selon la revendication 7, **caractérisée en ce que** la butée de levée supérieure (20) est formée par le noyau polaire (10) et la butée de levée inférieure (21) est formée par un élément de butée en forme d'anneau ou de disque (23), qui est introduit dans l'évidement (4) du corps de soupape (5), dans lequel l'induit (3) est logé, et qui s'appuie sur un épaulement annulaire (24) du corps de soupape (5).

9. Soupape d'aspiration selon l'une quelconque des revendications précédentes, **caractérisée en ce que** la soupape d'aspiration comprend un écrou-raccord (25) pour la fixation à une partie de boîtier d'une pompe haute pression, dans laquelle un bourrelet annulaire (27) s'étendant radialement vers l'extérieur est de préférence formé sur la douille magnétique (13) pour l'appui de l'écrou-raccord (25).

10. Pompe haute pression pour un système d'injection de carburant, en particulier un système d'injection à rampe commune, avec une soupape d'aspiration à actionnement électromagnétique selon l'une quelconque des revendications précédentes.
